# EUROPEAN PATENT APPLICATION

(11) **EP 2 998 915 A1**
(43) Date of publication of application: **23.03.2016**
(21) Application number: 15184446.1
(22) Date of filing: 09.09.2015
(51) Int. Cl.: G06Q 20/18, G06Q 20/34, G07F 5/18, G07F 11/00

(54) **CHECKOUT SYSTEM, SETTLEMENT APPARATUS AND METHOD FOR PROCESSING SETTLEMENT BY SETTLEMENT APPARATUS**

(30) Priority: 18.09.2014 JP 2014190310
(71) Applicant: Toshiba TEC Kabushiki Kaisha, Tokyo 141-0032 (JP)
(72) Inventor: NAMURA, Shinya, Shinagawa-ku, Tokyo 141-0032 (JP)
(74) Representative: Takeuchi, Maya

(57) **Abstract**

If settlement information is not processed as a commodity transaction using a member card, a settlement apparatus displays a screen for inquiring of a customer who is subjected to the commodity transaction a carrying/non-carrying of the member card and for receiving an input of the carrying/non-carrying of the member card on a display device. If the settlement information is already processed as the commodity transaction using the member card, or if the input of the carrying/non-carrying of the member card is received, the settlement apparatus displays a screen for receiving a selection input one method adopted from a plurality of settlement methods on a display device. Then, the settlement apparatus carries out a settlement processing of the received settlement information with the one settlement method the selection input of which is received.

## Description

### FIELD

Embodiments described herein relate generally to a semi-self-checkout system, a settlement apparatus used in such a system, and a method for processing a settlement by the settlement apparatus.

### BACKGROUND

As a checkout system for a large retail store such as a supermarket, there is known a semi-self-system. Such a system carries out a registration processing and a settlement processing for the purchased commodities respectively with a commodity registration apparatus and a settlement apparatus which are different from each other. In addition, operation of the commodity registration apparatus is carried out by a store clerk, and operation of the settlement apparatus is carried out by a customer. In such a system, settlement information for the settlement processing is transferred from the commodity registration apparatus to the settlement apparatus that is not being used by a customer.

Incidentally, a service for members is often used as one of sales promotion methods in a store. The service for members includes a service in which prerogative points are given to a member according to a purchased amount, a service in which a commodity is sold to a member at a member price cheaper than a regular price and the like. In order that a member enjoys such a member service, it is necessary to enable the system to read data of a member card before settlement information is transferred to the settlement apparatus. Thus, a member who completes a registration of purchased commodities as a non-member because he/she does not show his/her own member card to a store clerk who operates the commodity registration apparatus cannot receive such a member service even if he/she realizes that he/she carries the member card at the time of settlement in the settlement apparatus.

### BRIEF DESCRIPTION OF THE DRAWINGS

Fig. 1 is a perspective view illustrating a checkout system according to a present embodiment;
Fig. 2 is a block diagram illustrating a commodity registration apparatus and a settlement apparatus of the checkout system shown in Fig. 1;
Fig. 3 is a schematic view illustrating main data tables respectively formed in each RAM of the commodity registration apparatus and the settlement apparatus shown in Fig. 2;
Fig. 4 is a flowchart illustrating a main procedure of a control processing executed according to control programs by a CPU of the commodity registration apparatus;
Fig. 5 is a flowchart illustrating a main procedure of the control processing executed according to control programs by the CPU of the commodity registration apparatus;
Fig. 6 is a schematic view illustrating an example of a card inquiry screen displayed on a touch panel of the commodity registration apparatus;
Fig. 7 is a schematic view illustrating an example of a registration screen displayed on the touch panel of the commodity registration apparatus;
Fig. 8 is a schematic view illustrating an example of a transmission destination selection screen displayed on the touch panel of the commodity registration apparatus;
Fig. 9 is a schematic view illustrating an example of a notification screen displayed on the touch panel of the commodity registration apparatus;
Fig. 10 is a flowchart illustrating a main procedure of a control processing executed according to control programs by a CPU of the settlement apparatus;
Fig. 11 is a schematic view illustrating an example of a first settlement screen displayed on a touch panel of the settlement apparatus; and
Fig. 12 is a schematic view illustrating an example of a second settlement screen displayed on the touch panel of the settlement apparatus.

### DETAILED DESCRIPTION

In accordance with one embodiment, a settlement apparatus constitutes a checkout system together with a commodity registration apparatus connected to the settlement apparatus through a network. The settlement apparatus comprises a reception module, a determination module, a confirmation display module, a selection display module and a processing module. The reception module receives settlement information used for settling a commodity transaction of a purchased commodity registered with the commodity registration apparatus through the network. The determination module determines whether or not the received settlement information is processed as a commodity transaction using a member card in the commodity registration apparatus. The confirmation display module displays a screen for inquiring of a customer who is subjected to the commodity transaction a carrying/non-carrying of the member card and for receiving an input of the carrying/non-carrying of the member card on a display device if the settlement information is not processed as the commodity transaction using the member card. The selection display module displays a screen for receiving a selection input of one method adopted from a plurality of settlement methods on the display device if the settlement information is already processed as the commodity transaction using the member card, or if the input of the carrying/non-carrying of the member card is received. The processing module carries out a settlement processing of the settlement information received by the reception module with the one settlement method the selection input of which is received.

Preferably, the selection display module displays a first screen for receiving an selection input of one method adopted from the plurality of settlement methods including a payment method using a member card on the display device if the settlement information is already processed as a commodity transaction using the member card, or if an input of the carrying of the member card is received, or displays a second screen for receiving an selection input of one method adopted from the plurality of settlement methods excluding the payment method using the member card on the display device if an input of the non-carrying of the member card is received.

Preferably, the second screen displays the payment method using the member card in an excluding manner such that it is displayed in an unselectable state.

Preferably, the settlement apparatus further comprises an update module configured to update the settlement information received by the reception module to the information processed as a commodity transaction using the member card if the input of the carrying of the member card is received.

The processing module may carry out a settlement processing with the settlement method the selection input of which is received for the settlement information updated by the update module.

The present invention also relates to a checkout system, comprising at least one commodity registration apparatus and at least one settlement apparatus connected with the commodity registration apparatus through a network to receive settlement information from the commodity registration apparatus, wherein the commodity registration apparatus comprises a card reception module configured to receive an input of a member card; a registration module configured to acquire a commodity code for specifying a purchased commodity and register sales data of the purchased commodity; a generation module configured to generate settlement information for settling a commodity transaction for the purchased commodity based on the sales data of the purchased commodity that is registered by the registration module during the period of registration until a completion of the registration is instructed together with information for identifying whether or not an input of the member card is received; and a sending module configured to send the settlement information to the settlement apparatus through the network.

The checkout system further comprises a settlement apparatus comprises a reception module configured to receive the settlement information used for settling a commodity transaction of the purchased commodity registered in the commodity registration apparatus through the network; a determination module configured to determine whether or not the settlement information received by the reception module is processed as a commodity transaction using a member card in the commodity registration apparatus based on the information for identifying whether or not an input of the member card is received; a confirmation display module configured to display a screen for inquiring of a customer who is subjected to the commodity transaction a carrying/non-carrying of the member card and for receiving an input of the carrying/non-carrying of the member card on a display device if the settlement information is not processed as the commodity transaction using the member card; a selection display module configured to display a screen for receiving a selection input of one method adopted from a plurality of settlement methods on the display device if the settlement information is already processed as the commodity transaction using the member card, or if the input of the carrying/non-carrying of the member card is received; and a processing module configured to carry out a settlement processing of the settlement information received by the reception module with the one settlement method the selection input of which is received.

The present invention further relates to a method for processing settlement by a settlement apparatus which constitutes a checkout system together with a commodity registration apparatus connected through a network to settle a commodity transaction of a purchased commodity registered in the commodity registration apparatus, including: receiving settlement information used for settling a commodity transaction of a purchased commodity registered with the commodity registration apparatus through the network; determining whether or not settlement information is processed as a commodity transaction using a member card in the commodity registration apparatus; displaying a screen for inquiring of a customer who is subjected to the commodity transaction a carrying/non-carrying of the member card and for receiving an input of the carrying/non-carrying of the member card on a display device if the settlement information is not processed as the commodity transaction using the member card; displaying a screen for receiving a selection input of one method adopted from a plurality of settlement methods on the display device if the settlement information is already processed as the commodity transaction using the member card, or if the input of the carrying/non-carrying of the member card is received; and carrying out a settlement processing of the settlement information received by the reception module with the one settlement method the selection input of which is received.

Preferably, the method further comprises displaying a first screen for receiving an selection input of one method adopted from the plurality of settlement methods including a payment method using a member card on the display device if the settlement information is already processed as a commodity transaction using the member card, or if an input of the carrying of the member card is received, or displaying a second screen for receiving an selection input of one method adopted from the plurality of settlement methods excluding the payment method using the member card on the display device if an input of the non-carrying of the member card is received.

Preferably, the second screen displays the payment method using the member card in an excluding manner such that it is displayed in an unselectable state.

Preferably, the method further comprises updating the settlement information received at the receiving step to the information processed as a commodity transaction using the member card if the input of the carrying of the member card is received, and carrying out a settlement processing with the settlement method the selection input of which is received for the settlement information updated at the updating step.

The present invention further relates to a program for causing a computer constituting a checkout system together with a commodity registration apparatus to execute as a settlement apparatus described above.

Hereinafter, embodiments of a semi-self-checkout system in which even a member who completes registration for purchased commodities through a commodity registration apparatus as a non-member can receive a member service through a settlement apparatus are described, as non-limiting examples, with reference to the accompanying drawings.

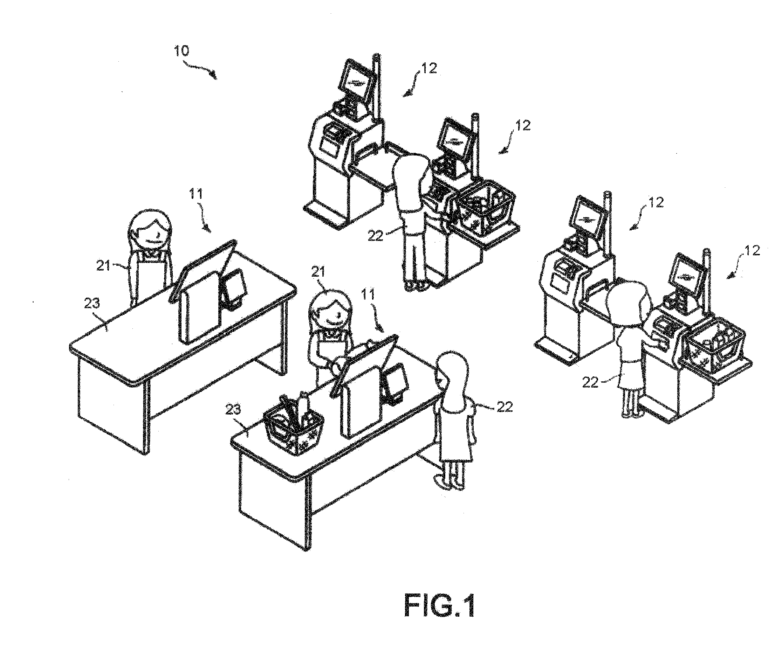

Fig. 1 is a perspective view illustrating a checkout system 10 according to a present embodiment. The checkout system 10 includes at least one commodity registration apparatus 11 and at least one settlement apparatus 12. In Fig. 1, it is exemplified that the checkout system 10 includes two commodity registration apparatuses 11 and four settlement apparatuses 12. In the checkout system 10, the number of each of the commodity registration apparatuses 11 and the settlement apparatuses 12 is not limited, and the ratio of the number of the commodity registration apparatuses 11 to the number of the settlement apparatuses 12 is also not limited. The commodity registration apparatus 11 and the settlement apparatus 12 are arranged at a checkout zone in a store such as a supermarket.

A store clerk 21 called as a checker is an operator of the commodity registration apparatus 11. A customer 22 who purchases commodities sold in the store is an operator of the settlement apparatus 12. However, the settlement apparatus 12 is occasionally operated by the store clerk.

In Fig. 1, the commodity registration apparatus 11 is installed on a work table 23. The work table 23 has a rectangular-shaped top plate. A plurality of work tables 23 are arranged with top plates parallel to each other in the longitudinal direction thereof, and in this way, passages for customers 22 are respectively formed.

The commodity registration apparatus 11 has functions of a registration processing of purchased commodity, a generation of settlement information, a settlement processing and a notification of settlement information to the settlement apparatus 12. The registration processing is a processing in which commodities brought by the customer who enters into the passage are registered as purchased commodities. The settlement processing is a processing for settlement of a transaction of the purchased commodities. The settlement information is required in the settlement processing.

In a case in which settlement information is informed by the commodity registration apparatus 11, the settlement apparatus 12 carries out a settlement processing based on the settlement information.

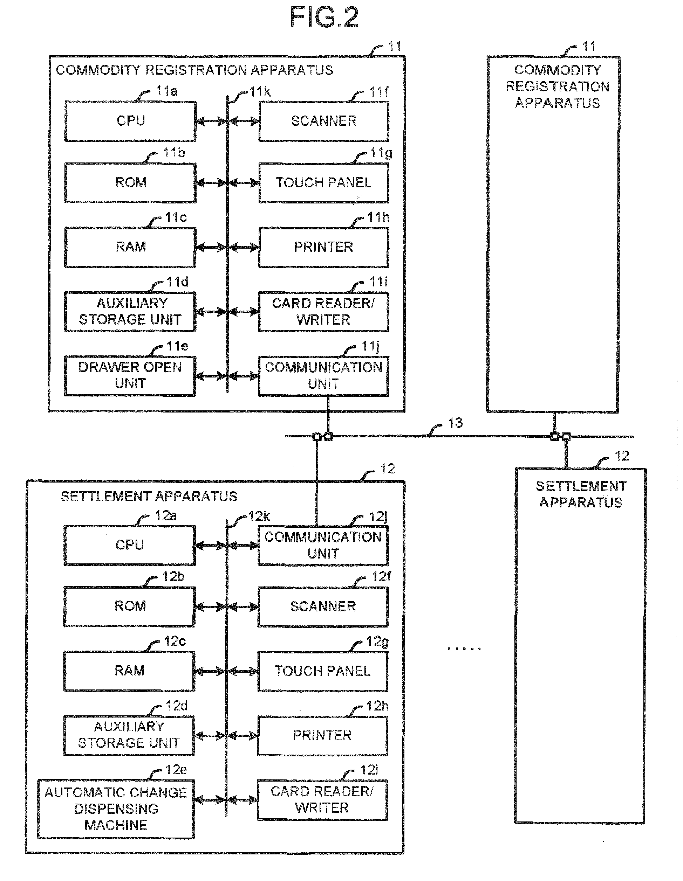

Fig. 2 is a block diagram illustrating the commodity registration apparatus 11 and the settlement apparatus 12. Both the commodity registration apparatus 11 and the settlement apparatus 12 are connected to an LAN (local area network) 13 serving as a network. Instead of the LAN 13, the network may also be other communication network such as the Internet, a wireless LAN and the like. Alternatively, information may be transmitted or received through a server between the commodity registration apparatus 11 and the settlement apparatus 12.

The commodity registration apparatus 11 includes a CPU (central processing unit) 11a, a ROM (read-only memory) 11b, a RAM (random-access memory) 11c, an auxiliary storage unit 11d, a drawer open unit 11e, a scanner 11f, a touch panel 11g, a printer 11h, a card reader/writer 11i, a communication unit 11j and a transmission system 11k.

The CPU 11a, the ROM 11b, the RAM 11c and the auxiliary storage unit 11d are connected to each other via the transmission system 11k to constitute a computer.

The CPU 11a is a central part of the computer mentioned above. The CPU 11a controls each section to achieve various functions of the commodity registration apparatus 11 according to an operating system, a middleware and an application program which are stored in the ROM 11b and the RAM 11c.

The ROM 11b is a main storage part of the computer mentioned above. The ROM 11b stores the operating system mentioned above. The ROM 11b also stores the middleware and the application program. As occasion demands, the ROM 11b also stores data required to execute various processing by the CPU 11a.

The RAM 11c is also a main storage part of the computer mentioned above. The RAM 11c stores data required to execute various processing by the CPU 11a. Further, the RAM 11c is also used as a work area to store data temporarily used when the CPU 11a executes various processing.

The auxiliary storage unit 11d is an auxiliary storage part of the computer mentioned above. The auxiliary storage unit 11d stores data used when the CPU 11a carries out various processing, or the data generated in the processing executed by the CPU 11a. As the auxiliary storage unit 11d, for example, an EEPROM (electric erasable programmable read-only memory), an HDD (hard disk drive), or an SSD (solid state drive) and the like may be used.

The application programs stored in the ROM 11b or the auxiliary storage unit 11d include a control program described relating to a later-described control processing. Generally, the transfer of the commodity registration apparatus 11 is made in a state in which the control programs are stored in the ROM 11b or the auxiliary storage unit 11d.

However, the commodity registration apparatus 11 may also be transferred in a state in which the control programs are not stored in the ROM 11b or the auxiliary storage unit 11d. In this case, the control programs are transferred in a state in which they are recorded in a removable recording medium such as a magnetic disk, a magnetic optical disk, an optical disk, a semiconductor memory and the like. Alternatively, the control programs are transferred through a network, and the transferred control programs are written into the auxiliary storage unit 11d of the commodity registration apparatus 11 transferred separately as described above.

The drawer open unit 11e automatically opens a drawer for receiving money.

The scanner 11f reads a commodity code of a commodity to obtain information of the commodity. Various well-known types of scanners can be used as the scanner 11f without any changes. The scanner 11f may correspond to only one of various well-known types, or may correspond to a plurality of types. The scanner 11f may include a fixed or handy type two-dimensional code scanner. In addition, the scanner 11f may also be a scanner of a type which uses an image recognition technology to identify a commodity from an image of the commodity.

The touch panel 11g includes a display device and a touch sensor. The display device shows any screen such as a GUI screen on the display thereof. For example, a well-known device such as a color LCD can be used as the display device. The touch sensor is overlaid on a display surface of the display device. The touch sensor detects a touch position on the display surface of the display device by the operator, and sends the position information to the CPU 11a. A well-known device can be used as the touch sensor.

The printer 11h prints various character strings, images and the like on a receipt paper to issue a receipt. Such a printer 11h may be, for example, a thermal printer, an impact dot printer and the like.

The card reader/writer 11i has a function of reading data recorded in a card, and a function of writing data into the card mentioned above. In addition to a card for settlement such as a credit card, a debit card, an electronic money card, a prepaid card, and the like, the card may include a member card called as a member's card, a point card or the like. The member card records at least information for identifying a member who possesses the card. The card reader/writer 11i may be any one of a magnetic type device, a contact-type device, or a non-contact type device, or may include a plurality of types of devices.

The communication unit 11j carries out data communication with a plurality of the settlement apparatuses 12 that are connected with each other through the LAN 13. The communication unit 11j can also carry out data communication with other commodity registration apparatuses 11 through the LAN 13.

The transmission system 11k transmits data that is transmitted or received between the CPU 11a, the ROM 11b, the RAM 11c, the auxiliary storage unit 11d, the drawer open unit 11e, the scanner 11f, the touch panel 11g, the printer 11h, the card reader/writer 11i and the communication unit 11j. The transmission system 11k may be a well-known device including various buses such as a system bus and various interface circuits connecting buses with each section.

For example, an existing POS terminal may be used as the hardware of the commodity registration apparatus 11 as stated above.

The settlement apparatus 12 includes a CPU 12a, a ROM 12b, a RAM 12c, an auxiliary storage unit 12d, an automatic change dispensing machine 12e, a scanner 12f, a touch panel 12g, a printer 12h, a card reader/writer 12i, a communication unit 12j and a transmission system 12k.

The CPU 12a, the ROM 12b, the RAM 12c and the auxiliary storage unit 12d are connected to each other via the transmission system 12k to constitute a computer.

The CPU 12a is a central part of the computer mentioned above. The CPU 12a controls each section to achieve various operations of the settlement apparatus 12 according to an operating system, a middleware and an application program which are stored in the ROM 12b and the RAM 12c.

The ROM 12b is a main storage part of the computer mentioned above. The ROM 12b stores the operating system mentioned above. The ROM 12b also stores the middleware and the application program. As occasion demands, the ROM 12b also stores data required to execute various processing by the CPU 12a.

The RAM 12c is also a main storage part of the computer mentioned above. The RAM 12c stores data required to execute various processing by the CPU 12a. Further, the RAM 12c is also used as a work area to store data temporarily used when the CPU 12a executes various processing.

The auxiliary storage unit 12d is an auxiliary storage part of the computer mentioned above. The auxiliary storage unit 12d stores data used when the CPU 12a carries out various processing, or data generated in the processing executed by the CPU 12a. As the auxiliary storage unit 12d, for example, an EEPROM, an HDD, or an SSD, and the like may be used.

The application programs stored in the ROM 12b or the auxiliary storage unit 12d include a control program described relating to a later-described control processing. Generally, the transfer of the settlement apparatus 12 is made in a state in which the control programs are stored in the ROM 12b or the auxiliary storage unit 12d. However, the settlement apparatus 12 may also be transferred in a state in which the control programs are not stored in the ROM 12b or the auxiliary storage unit 12d. In this case, the control programs are transferred in a state in which they are recorded in a removable recording medium such as a magnetic disk, a magnetic optical disk, an optical disk, a semiconductor memory and the like. Alternatively, the control programs are transferred through a network, and the transferred control programs are written into the auxiliary storage unit 11d of the commodity registration apparatus 11 transferred separately as described above.

The automatic change dispensing machine 12e receives the input coins and bills. Further, the automatic change dispensing machine 12e discharges coins and bills as a change.

The scanner 12f reads a commodity code of a commodity to obtain information of the commodity. Various well-known types of scanners can be used as the scanner 12f without any changes. The scanner 12f may correspond to only one of various well-known types, or may correspond to a plurality of types. The scanner 12f may include a fixed or handy type two-dimensional code scanner. In addition, the scanner 12f may also be a scanner of a type which uses an image recognition technology to identify a commodity from an image of the commodity.

The touch panel 12g includes a display device and a touch sensor. The display device shows any screen such as a GUI screen on the display thereof. For example, a well-known device such as a color LCD can be used as the display device. The touch sensor is overlaid on a display surface of the display device. The touch sensor detects a position touched by the operator on the display surface of the display device, and sends the position information to the CPU 12a. A well-known device can be used as the touch sensor.

The printer 12h prints various character strings, images and the like on a receipt paper to issue a receipt. Such a printer 12h may be, for example, a thermal printer, an impact dot printer and the like.

The card reader/writer 12i has a function of reading data recorded in a card, and a function of writing data into the card mentioned above. In addition to a card for settlement such as a credit card, a debit card, an electronic money card, a prepaid card, and the like, the card may include a member card called as a member's card, a point card or the like. The member card records at least information for identifying a member who possesses the card. The card reader/writer 12i may be any one of a magnetic type device, a contact-type device, or a non-contact type device, or may include a plurality of types of devices.

The communication unit 12j carries out data communication with a plurality of commodity registration apparatuses 11 that are connected with each other through the LAN 13. The communication unit 12j can also carry out data communication with other settlement apparatuses 12 through the LAN 13.

The transmission system 12k transmits data that is transmitted or received between the CPU 12a, the ROM 12b, the RAM 12c, the auxiliary storage unit 12d, the automatic change dispensing machine 12e, the scanner 12f, the touch panel 12g, the printer 12h, the card reader/writer 12i and the communication unit 12j. The transmission system 12k may be a well-known device including various buses such as a system bus and various interface circuits connecting buses with each section.

For example, an existing self-checkout POS terminal may be used as the hardware of the settlement apparatus 12 as stated above.

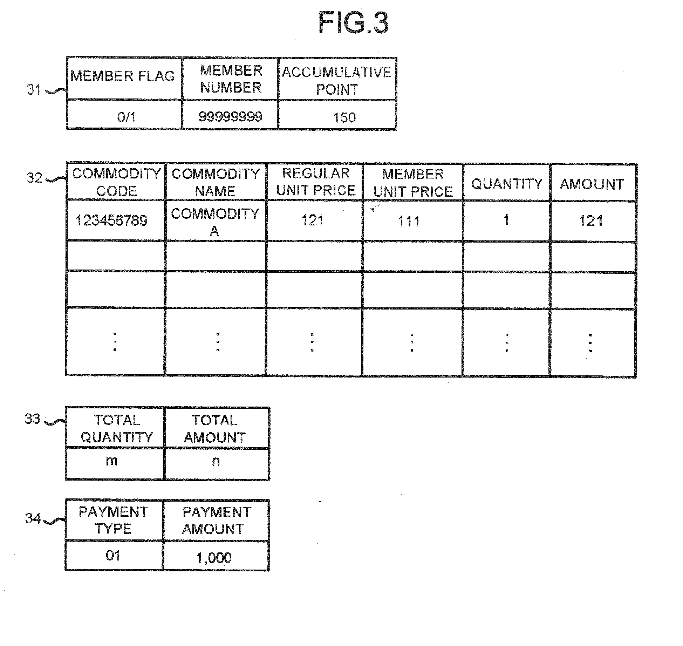

The checkout system 10 including the commodity registration apparatus 11 and the settlement apparatus 12 with the constitution described above forms data tables 31, 32, 33 and 34 shown in Fig. 3 respectively in the RAM 11c and the RAM 12c of the commodity registration apparatus 11 and the settlement apparatus 12.

The data table 31 is an area for storing a member flag, a member number and an accumulative point as information of a member. As to the member flag, the default is "0", and it is set to "1" when a commodity transaction is performed by a member. The member number is a unique number assigned to each member for identifying each member individually. The member number is recorded in a member card possessed by each member. The member number read from the member card by the card reader/writers 11i, 12i is stored in the data table 31.

The accumulative point is an accumulative value of the prerogative points given to a member specified with a member number. Though it is not shown in figures, the checkout system 10 connects with a database server through the LAN 13. The database server includes a member database for accumulating the prerogative point for each member number. When the member number is read from the member card by the card reader/writer 11i or 12i, the CPU 11a of the commodity registration apparatus 11 or the CPU 12a of the settlement apparatus 12 inquires the accumulative point with the member number to the database server. The database server which receives the inquiry accesses the member database to read an accumulative value (accumulative point) of the prerogative point associated with the member number from the member database, and notifies the commodity registration apparatus 11 or the settlement apparatus 12 of the read accumulative point through the LAN 13. The CPU 11a of the commodity registration apparatus 11 or the CPU 12a of the settlement apparatus 12 stores the accumulative point notified from the database server in the data table 31.

Such a data table 31 is referred to as a member table. Hereinafter, the data table 31 used for the commodity registration apparatus 11 is represented as a member table 31a, and the data table 31 used for the settlement apparatus 12 is represented as a member table 31b.

The data table 32 is an area for storing a plurality of records including each data of a commodity code, a commodity name, a regular unit price, a member unit price, a quantity and an amount. The commodity code is a unique code for identifying each commodity individually. A commodity code represented by, for example, a barcode is assigned to each commodity. The commodity name, the regular unit price and the member unit price are a name and a price per unit of a commodity specified with a commodity code in one record. Then, the regular unit price is a price when a commodity is sold to a non-member, and the member unit price is a price when a commodity is sold to the member. Generally, the member price is cheaper than the regular price. The quantity and amount are sales data of a commodity specified with a commodity code in one record, that is, the sales volume and the sales amount corresponding to the sales volume.

In the database server described above, there is a commodity database for setting commodity information such as the commodity name, the regular unit price, the member unit price and the like in association with the commodity code of each commodity. In the commodity registration apparatus 11 or the settlement apparatus 12, when a commodity code is acquired, the CPU 11a or the CPU 12a inquires commodity information with the commodity code to the database server. The database server which receives the inquiry accesses the commodity database to read commodity information associated with the commodity code from the commodity database, and notifies the commodity registration apparatus 11 or the settlement apparatus 12 of the read commodity information through the LAN 13. The CPU 11a of the commodity registration apparatus 11 or the CPU 12a of the settlement apparatus 12 stores the commodity information notified from the database server in the data table 32.

Such a data table 32 is referred to as a registration commodity table. Hereinafter, the data table 32 used for the commodity registration apparatus 11 is represented as a registration commodity table 32a, and the data table 32 used for the settlement apparatus 12 is represented as a registration commodity table 32b.

The data table 33 is an area for storing a total quantity and a total amount. The total quantity is a sum of the quantity of each record stored in the registration commodity table 32. The total amount is a sum of the amount of each record stored in the registration commodity table 32.

Such a data table 33 is referred to as a total table. Hereinafter, the data table 33 used for the commodity registration apparatus 11 is represented as a total table 33a, and the data table 33 used for the settlement apparatus 12 is represented as a total table 33b.

The data table 34 is an area for storing a payment amount in association with a payment type. The payment type is information for identifying a price payment method at the time of settling a commodity transaction of the purchased commodities. The price payment method includes a cash payment, a credit payment, an electronic money payment and the like. Further, as a payment method only for the members, it is possible to pay after converting the accumulative points into monetary value, that is, a so-called point payment. The payment type is information for identifying the aforementioned cash payment, the credit payment, a note (e.g. voucher) payment, the electronic money payment, the point payment and the like. The payment amount is an amount paid in a payment method specified with the associated payment type.

Such a data table 34 is referred to as a payment table. Hereinafter, the data table 34 used for the commodity registration apparatus 11 is represented as a payment table 34a, and the data table 34 used for the settlement apparatus 12 is represented as a payment table 34b.

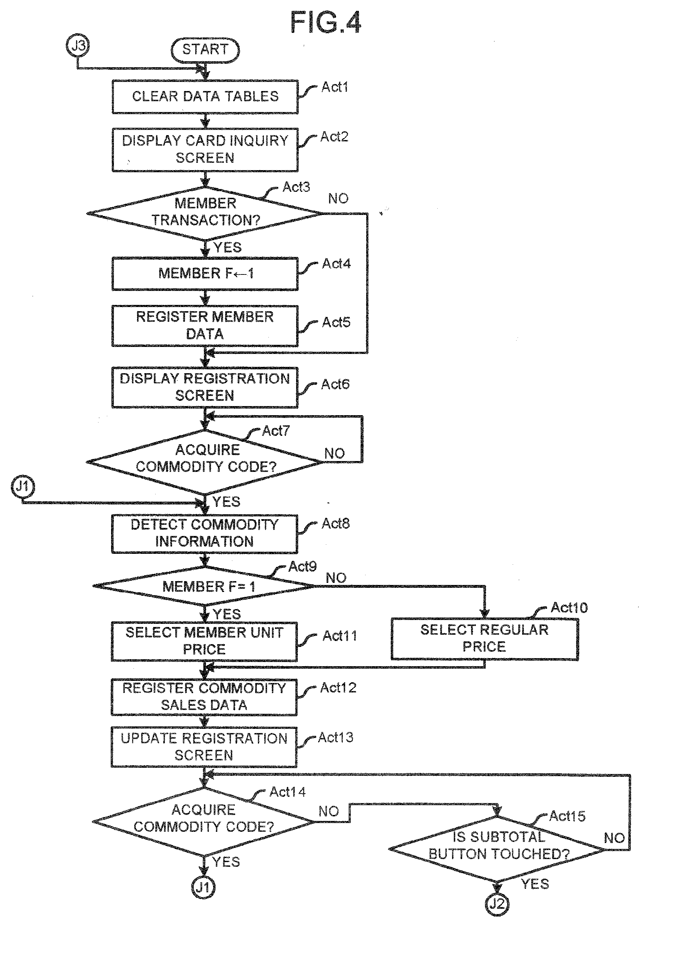

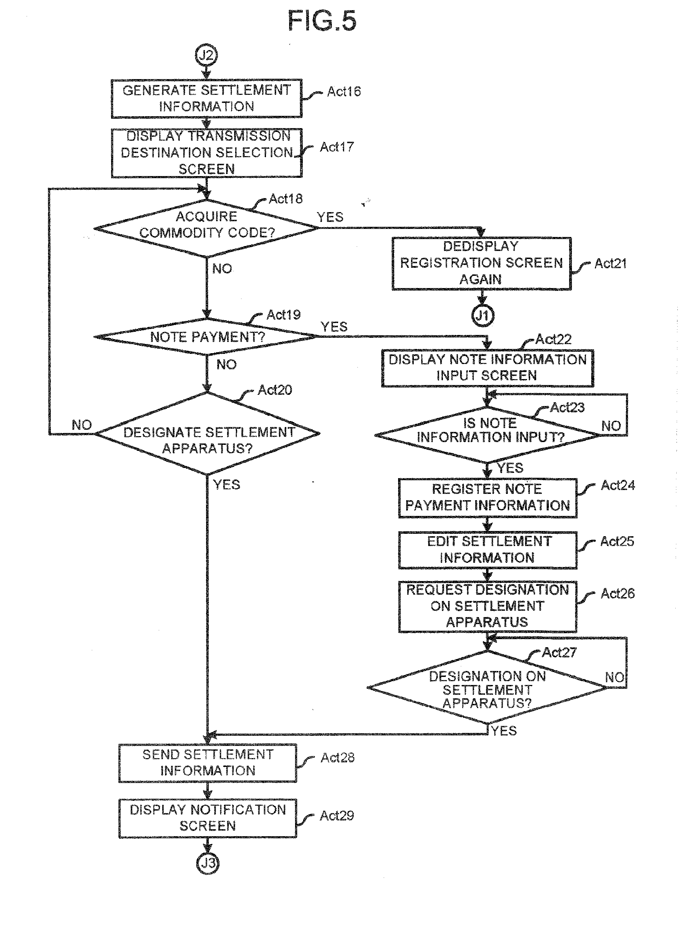

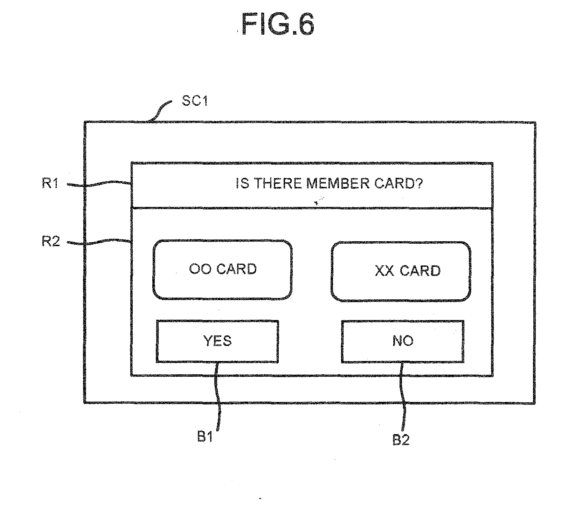

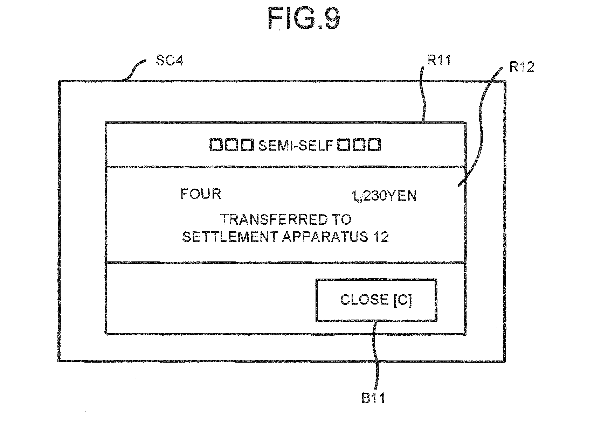

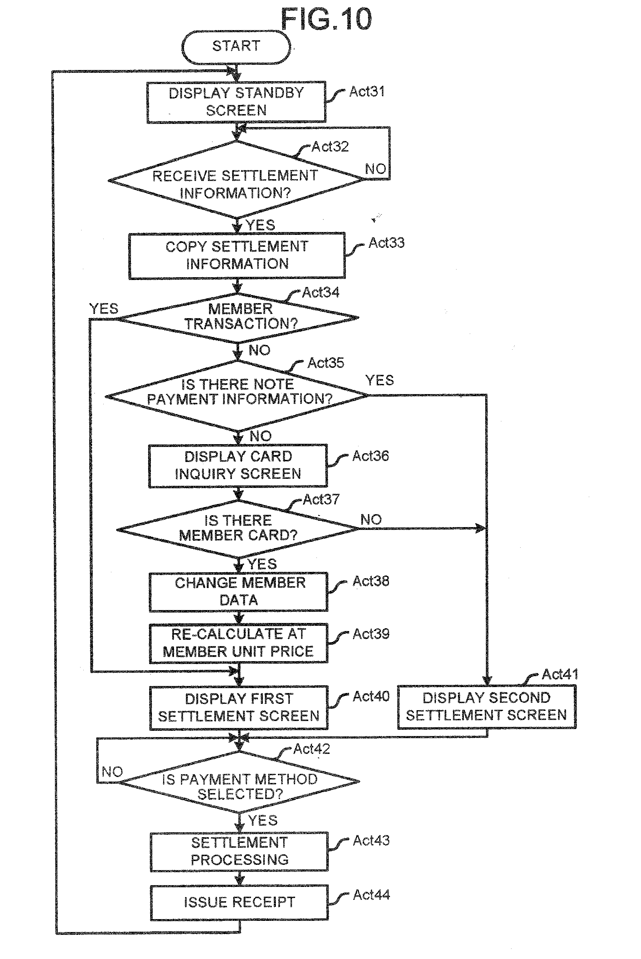

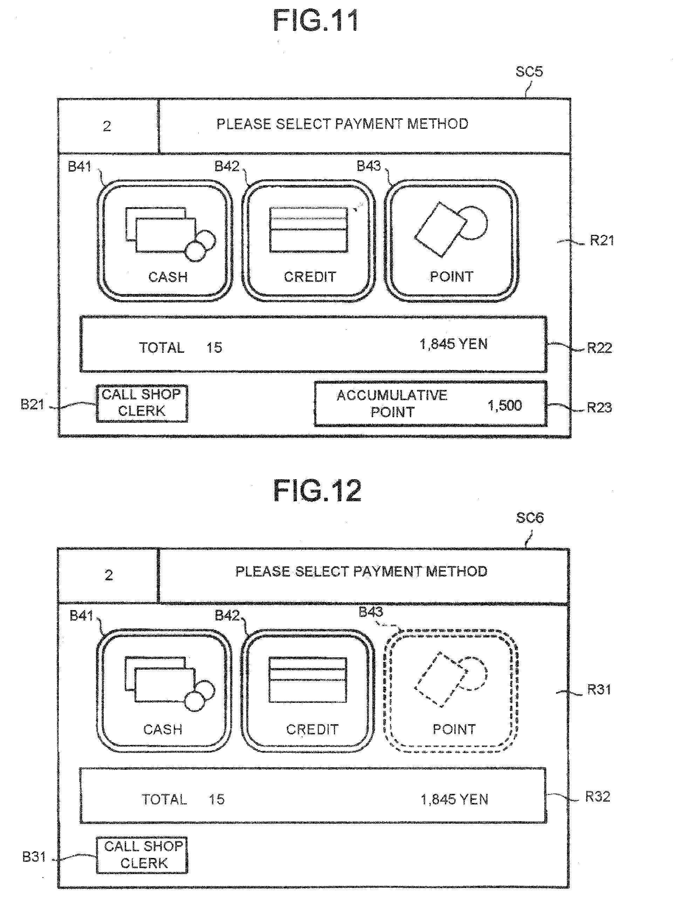

Fig.4 and Fig. 5 are flowcharts illustrating a main procedure of a control processing executed by the CPU 11a of the commodity registration apparatus 11 according to control programs. Fig. 6∼Fig. 9 are schematic views illustrating examples of various screens displayed on the touch panel 11g of the commodity registration apparatus 11 according to the control processing. Fig. 10 is a flowchart illustrating a main procedure of a control processing executed by the CPU 12a of the settlement apparatus 12 according to control programs. Fig. 11 and Fig. 12 are schematic views illustrating examples of various screens displayed on the touch panel 12g of the settlement apparatus 12 according to the control processing. Hereinafter, the operations of the checkout system 10 are described with reference to these figures. Further, the content of processing described below is an example, and various processing that can obtain same effects can be properly used.

First, operation of the commodity registration apparatus 11 is described.

When the commodity registration apparatus 11 is started in a mode in which a registration processing of the purchased commodity is carried out, the CPU 11a starts a processing according to the procedure shown in the flowchart in Fig. 4. First, the CPU 11a clears the data tables 31a∼34a (ACT 1). Next, the CPU 11a displays a card inquiry screen SC1 (refer to Fig. 6) in a part of the screen of the touch panel 11g to receive an input of a member card (ACT 2: card reception module).

As shown in Fig. 6, the card inquiry screen SC1 includes display areas R1 and R2, and buttons B1 and B2. The display area R1 displays a message inquiring whether or not he or she has a member card. The display area R2 displays images of available member cards. The button B1 is used to designate that it is a commodity transaction with the customer 22 who has the member card displayed in the display area R2 by the store clerk 21. The button B2 is used to designate that it is a commodity transaction with the customer 22 who doesn't have the member card displayed in the display area R2.

In the present embodiment, the member service in which commodities can be purchased at the member unit price is applied to only the member who carries the member card. Thus, in a case in which a member forgets to carry the member card with him/her, he/she cannot receive the member service and has to purchase commodities at the regular unit price.

Thus, the store clerk 21 who confirms the card inquiry screen SC1 asks the customer 22, who requests for the registration of the purchased commodities, whether or not he or she has the member card.

Then, in a case in which the customer 22 shows the member card, the store clerk 21 touches the button B1 and reads the data of the member card with the card reader/writer 11i. On the contrary, in a case in which the customer 22 cannot show the member card, the store clerk 21 touches the button B2.

After the card inquiry screen SC1 is displayed, the CPU 11a waits for until either the button B1 or the button B2 is touched (ACT 3). If it is detected that the button B1 is touched, the CPU 11a determines that it is a commodity transaction by a member (YES in ACT 3). In this case, the CPU 11a sets the member flag in the member table 31a to be "1" (ACT 4). The CPU 11a further registers a member number and an accumulative point in the member table 31a (ACT 5). The member number is information read from the member card by the card reader/writer 11i. The accumulative point is information stored in the member database in association with the member number. Further, the processing procedures in ACT 4 and ACT 5 are not limited to the present embodiment, and the processing in ACT 5 may be carried out before the processing in ACT 4 is executed.

If it is detected that the button B2 is touched but not the button B1, the CPU 11a determines that it is a commodity transaction by a non-member (NO in ACT 3). In this case, the CPU 11a doesn't execute the processing in ACT 4 and the processing in ACT 5.

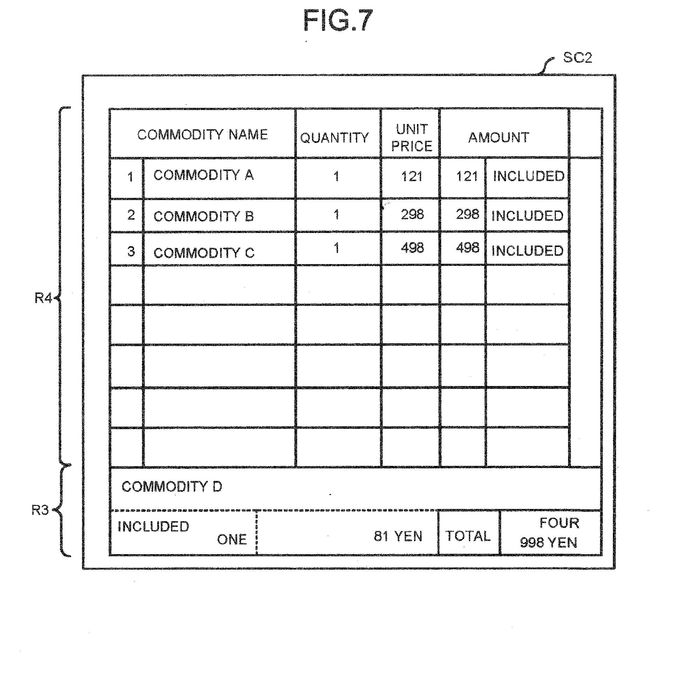

If the processing in ACTs 4-5 is ended, or it is determined that the commodity transaction by a non-member is carried out, the CPU 11a displays a registration screen SC2 (refer to Fig. 7) in a part of the screen of the touch panel 11g (ACT 6).

The registration screen SC2, which displays the contents in the registration commodity table 32a and the total table 33a, enables the store clerk 21 to confirm the execution status of registration processing. In Fig. 7, an example of the registration screen SC2 is shown. The registration screen SC2 includes display areas R3 and R4. The display area R3 displays a commodity name, quantity and unit price of a commodity which is most newly registered, and a total quantity and total amount of purchased commodities after the most newly purchased commodity is registered. The display area R4 displays a list of commodity name, quantity, unit price and amount of the commodities which have been registered prior to the registration of the commodity displayed in the display area R3.

Though not shown in figures, the CPU 11a displays various functional buttons such as a commodity button for manually designating a commodity by the store clerk 21, a subtotal button and the like in an area other than the registration screen SC2 in the screen of the touch panel 11g.

The store clerk 21 who confirms that the screen of the touch panel 11g is switched from the card inquiry screen SC1 to the registration screen SC2 operates, for example, the scanner 11f or the commodity button to sequentially input commodity codes of the commodities purchased by the customer 22. Then, after the input of the commodity codes of all the purchased commodities is completed, the store clerk 21 touches the subtotal button.

The CPU 11a which displays the registration screen SC2 waits for until a commodity code of a commodity to be sales-registered is acquired (ACT 7). If a commodity code input through the scanner 11f or the commodity button is acquired (YES in ACT 7), the CPU 11a detects the commodity information such as a commodity name, a regular unit price, a member unit price and the like which is stored in the commodity database in association with the commodity code (ACT 8). Further, the CPU 11a confirms whether or not the member flag in the member table 31a is set to be "1" (ACT 9).

If the member flag is not set to be "1" (NO in ACT 9), the CPU 11a selects the regular unit price from the commodity information (ACT 10). If the member flag is set to be "1" (YES in ACT 9), the CPU 11a selects the member unit price from the commodity information (ACT 11).

If the regular unit price or the member unit price is selected, the CPU 11a multiplies the sales volume by the regular unit price or the member unit price to calculate a sales amount. Then, the CPU 11a registers commodity sales data including the commodity code, the commodity name, the regular unit price, the member unit price, the sales volume and the sale amount in the registration commodity table 32a as one record (ACT 12: registration module). Further, the CPU 11a adds the sales volume and the sales amount to the total table 33a. Then, the CPU 11a updates the registration screen SC2 (ACT 13) according to the renewed contents of the registration commodity table 32a and the total table 33a.

After the registration screen SC2 is updated, the CPU 11a confirms whether or not a commodity code of a commodity to be sales-registered is acquired (ACT 14). If the commodity code has not been acquired yet (NO in ACT 14), the CPU 11a confirms whether or not the subtotal button is touched (ACT 15).

If the subtotal button is not touched (NO in ACT 15), the CPU 11a confirms whether or not the commodity code is acquired again (ACT 14). Thus, in ACT 14 and ACT 15, the CPU 11a waits for until the commodity code is acquired or the subtotal button is touched. Further, the CPU 11a confirms whether or not other event occurs (for example, other operation is carried out) in the waiting state in ACT 14 and ACT 15, and may proceed to a processing corresponding to the occurred event.

If a commodity code is acquired in the waiting state in ACT 14 and ACT 15 (YES in ACT 14), the CPU 11a returns to the processing in ACT 8. Then, the CPU 11a repeats the processing following to ACT 8 as being similar to that described above.

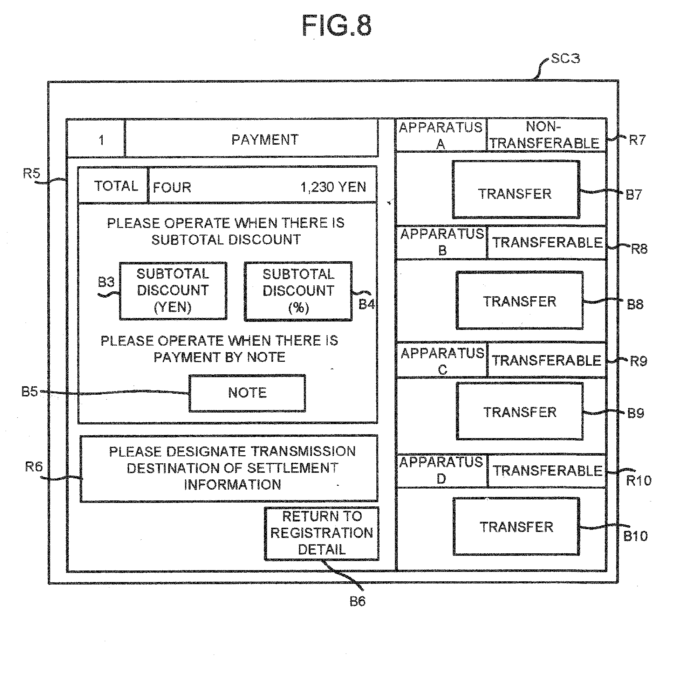

If the subtotal button is touched in the waiting state in ACT 14 and ACT 15 (YES in ACT 15), the CPU 11a proceeds to the processing in ACT 16 shown in Fig. 5. The CPU 11a generates settlement information (ACT 16: generation module) based on the contents of the member table 31a, the registration commodity table 32a and the total table 33a at this time. Then, the CPU 11a displays a transmission destination selection screen SC3 (refer to Fig. 8) in a part of the screen of the touch panel 11g (ACT 17).

The settlement information includes a list of a commodity name, regular unit price, member unit price, sales volume and sales amount of a registration commodity, and a total quantity and total amount of purchased commodities, a member flag, a member number and an accumulative point. Thus, if it is a commodity transaction by a member, the settlement information includes a member flag of which the state is "1" indicating that an input of a member card is received. The settlement information further includes a member number and an accumulative point acquired by receiving the input of the member card. On the other hand, if it is a commodity transaction by a non-member, the settlement information includes a member flag of which the state is "0" indicating that an input of a member card is not received.

Fig. 8 is an example of the transmission destination selection screen SC3. The transmission destination selection screen SC3 includes display areas R5, R6, R7, R8, R9 and R10 and buttons B3, B4, B5, B6, B7, B8, B9 and B10.

The display area R5 displays the total quantity and the total amount of the total table 33a. The display area R6 displays various kinds of messages. The buttons B3 and B4 are used to designate an application of discount to the total amount by the store clerk 21. The button B5 is used to designate that a note such as voucher is used as a price payment method to purchased commodities by the store clerk 21. The button B6 is used to designate a part of area of the screen of the touch panel 11g to return it to the registration screen SC2 by the store clerk 21.

The display areas R7∼R10 respectively display transmission availability (OK or NO) of settlement information to each of the four settlement apparatuses 12. The buttons B7∼B10 are used to designate the transmission of settlement information to each of the four settlement apparatuses 12 by the store clerk 21. The settlement apparatus 12 does not allow the reception of the transmission of settlement information at the time a settlement processing is being executed. In the display areas R7∼R10 associated with the settlement apparatuses 12 in such a state, "non-transferable" is displayed. On the contrary, in the display areas R7∼R10 associated with the settlement apparatuses 12 which allow the reception of the transmission of settlement information, "transferable" is displayed. Further, the display forms of the buttons B7∼B10 may be different from each other according to whether or not the associated settlement apparatuses 12 respectively receive the transmission of settlement information. Alternatively, in a case in which the associated settlement apparatuses 12 do not receive the transmission of settlement information, the buttons B7∼B10 may not be displayed.

When the transmission destination selection screen SC3 is displayed, the CPU 11a confirms whether or not a commodity code of a commodity to be sales-registered is acquired (ACT 18). If a commodity code is not acquired (NO in ACT 18), the CPU 11a confirms whether or not a note payment is designated (ACT 19). If a note payment is not designated (NO in ACT 19), the CPU 11a confirms whether or not a settlement apparatus 12 to be the transmission destination of settlement information is designated (ACT 20). If the settlement apparatus 12 is not designated (NO in ACT 20), the CPU 11a confirms whether or not a commodity code is acquired again (ACT 18). Thus, in ACT 18-ACT 20, the CPU 11a waits for until a commodity code is acquired, a note payment is designated, or a settlement apparatus 12 is designated. Further, the CPU 11a confirms whether or not other event occurs (for example, other operation is carried out) in the waiting state in ACT 18-ACT 20, and may proceed to a processing corresponding to the occurrence event. For example, if either of the buttons B3 and B4 is touched by the store clerk 21, the CPU 11a changes the total amount contained in the settlement information in response to an instruction from the store clerk 21 thereafter.

If a commodity code is acquired in the waiting state in ACT 18∼ACT 20 (YES in ACT 18), the CPU 11a returns a part of area of the screen on the touch panel 11g to the registration screen SC2 (ACT 21). After that, the CPU 11a proceeds to the processing in ACT 8 shown in Fig. 4, and repeats the processing following to ACT 8 as being similar to that described above.

If the button B5 is touched by the store clerk 21 in the waiting state in ACT 18-ACT 20, the CPU 11a recognizes that a price payment by note is designated (YES in ACT 19). The CPU 11a displays a note information input screen in a part of the screen of the touch panel 11g (ACT 22). The note information input screen instructs the store clerk 21 to input the par value or face value and the number of the notes used in the price payment. The store clerk 21 who confirms the note information input screen operates the touch panel 11g to input the par value and the number of the notes paid by the customer 22 according to the screen.

The CPU 11a displays the note information input screen as described above and then waits for until note information is input (ACT 23). When the par value and the number of the notes are input as the note information (YES in ACT 23), the CPU 11a calculates a payment amount by note based on the par value and the number of notes input. Then, the CPU 11a registers the payment amount in association with a payment type indicating the note payment in the payment table 34a (ACT 24). Further, the CPU 11a edits the settlement information in such a manner that the note payment information registered in the payment table 34a is contained (ACT 25).

Next, the CPU 11a displays a message for notifying the store clerk 21 of designation of the settlement apparatus 12 to be the transmission destination of the settlement information in a part of the transmission destination selection screen SC3 (for example, in the display area R6) (ACT 26). Then, the CPU 11a waits for until the settlement apparatus 12 is designated (ACT 27).

In the waiting state in ACT 18-ACT 20, or in the waiting state in ACT 27, if one of the buttons B7∼B10 on the transmission destination selection screen SC3 is touched by the store clerk 21, the CPU 11a recognizes that the settlement apparatus 12 corresponding to the one button operated is designated. If the settlement apparatus 12 is designated (YES in ACT 20 or ACT 27), the CPU 11a sends the settlement information to the designated settlement apparatus 12 (ACT 28: sending module). Specifically, the CPU 11a controls the communication unit 11j such that the designated settlement apparatus 12 is set to a destination and the settlement information is sent to the LAN 13. In this way, the settlement information is sent to the settlement apparatus 12 through the LAN 13.

The CPU 11a sends the settlement information as described above, and thereafter displays a notification screen SC4 (refer to Fig. 9) in a part of the screen of the touch panel 11g (ACT 29). Fig. 9 is an example of the notification screen SC4. The notification screen SC4 includes display areas R11 and R12 and a button B11.

The display area R11 displays an image for enabling the store clerk 21 to realize that a semi-self-settlement is selected. The semi-self-settlement is a settlement form in which a settlement processing is executed in the settlement apparatus 12 in response to the operation of the customer 22. The display area R12 displays not only the total quantity and the total amount contained in the settlement information, but also a message indicating that the settlement information including the total quantity and the total amount is transferred to, in case of the present embodiment, the one of the four settlement apparatuses 12. The button B11 is used to instruct the store clerk 21 to close the notification screen SC4. When the button B11 is touched, the CPU 11a returns to the processing in ACT 1 shown in Fig. 4, and repeats the processing following to ACT 1 as being similar to that described above.

Further, in a case in which the buttons B7∼B10 associated with the settlement apparatuses 12 which do not receive the transmission of settlement information are touched, the CPU 11a does not determine that YES is taken in ACT 20 or ACT 27. In this way, the CPU 11a doesn't receive a designation on the settlement apparatus 12 which doesn't receive the transmission of settlement information. Thus, if all the settlement apparatuses 12 are in the stopped state for operation, or are set to an operation state in which the transmission of settlement information is not received, the CPU 11a doesn't wait for a designation for the settlement apparatuses 12.

The store clerk 21 who confirms the notification screen SC4 informs the customer 22 that a settlement processing is to be carried out by a settlement apparatus 12 displayed in the display area R12 among the four settlement apparatuses 12. Then, the customer 22 who receives this notification moves to the designated settlement apparatus 12 to carry out operation for settlement.

Next, operation of the settlement apparatus 12 is described.

When the settlement apparatus 12 is activated, the CPU 12a starts a processing according to the procedure shown in the flowchart in Fig. 10. First, the CPU 12a sets the screen of the touch panel 12g to a standby screen (ACT 31). The standby screen is used to display that the settlement apparatus 12 is not in the state for carrying out a settlement processing, and information or contents displayed on the standby screen is not limited. For example, it is assumed that a message representing that a settlement processing cannot be carried out, or any image such as an advertisement serving as a screen saver and the like may be displayed on the standby screen. After the standby screen is displayed on the touch panel 12g, the CPU 12a waits for until the settlement information is received (ACT 32).

As stated above, the CPU 11a of the commodity registration apparatus 11 sends the settlement information from the communication unit 11j to the LAN 13 in the processing in ACT 28 in Fig. 5. The aforementioned settlement information is received by the communication unit 12j of the settlement apparatus 12 which is designated as the reception destination (reception module).

When the settlement information is received (YES in ACT 32), the CPU 12a copies the settlement information in the member table 31b, the registration commodity table 32b, the total table 33b and the payment table 34b (ACT 33).

That is, in a case in which the member flag contained in the settlement information is "0", the CPU 12a stores the member flag in the member table 31b. In a case in which the member flag contained in the settlement information is "1", the CPU 12a stores not only the member flag but also a member number together with an accumulative point contained in the settlement information in the member table 31b.

The CPU 12a stores a list of commodity name, regular unit price, member unit price, sales volume and sales amount of registration commodities contained in the settlement information in the registration commodity table 32b. The CPU 12a further stores a total quantity and a total amount of purchased commodities contained in the settlement information in the total table 33b. Furthermore, in a case in which the settlement information includes note payment information, the CPU 12a stores a payment type and a payment amount which constitute note payment information in the payment table 34b.

Next, the CPU 12a checks the member flag stored in the member table 31b. The CPU 12a determines whether or not the received settlement information is information processed as a commodity transaction by a member (ACT 34: determination module) who shows a member card at the commodity registration apparatus 11. If the member flag is "1", the received settlement information is information processed as a commodity transaction by a member. In this case (YES in ACT 34), the CPU 12a displays a first settlement screen SC5 (refer to Fig. 11) in a part of the screen of the touch panel 12g (ACT 40: selection display module). A detailed description of the first settlement screen SC5 is described later.

On the other hand, if the member flag is "0", the received settlement information is information processed as a commodity transaction by a non-member. In this case (NO in ACT 34), the CPU 12a confirms whether or not the note payment information is stored in the payment table 34b (ACT 35). If the note payment information is not stored in the payment table 34b, the settlement is not carried out in the commodity registration apparatus 11. In this case (NO in ACT 35), the CPU 12a displays a card inquiry screen SC1 in a part of the screen of the touch panel 12g to receive an input of a member card (ACT 36: confirmation display module). The card inquiry screen SC1 is the same as the card inquiry screen SC1 displayed in the processing in ACT 2 in the commodity registration apparatus 11, and therefore the detailed description is not provided.

The customer 22 who confirms the card inquiry screen SC1 confirms the carrying/non-carrying of a member card again. Then, in a case of holding no member card, the customer 22 touches the button B2. On the contrary, in a case in which a member card that is not found at the time of registration of purchased commodities is found, the customer 22 touches the button B1 to enable the card reader/writer 12i to read the data of the member card.

After the card inquiry screen SC1 is displayed, the CPU 12a waits for until either the button B1 or the button B2 is touched (ACT 37). If it is detected that the button B2 is touched (NO in ACT 37), the CPU 12a displays a second settlement screen SC6 (refer to Fig. 12) in a part of the screen of the touch panel 12g (ACT 41: selection display module). A detailed description of the second settlement screen SC6 is described later.

On the contrary, if it is detected that the button B1 is touched (YES in ACT 37), the CPU 12a overwrites the member flag of the member table 31b with "1". Further, the CPU 12a registers a member number and an accumulative point in the member table 31b (ACT 38). The member number is information read from the member card by the card reader/writer 12i. The accumulative point is information stored in the member database in association with the member number.

Next, for each record stored in the registration commodity table 32b, the CPU 12a overwrites the data of amount with a value obtained by multiplying the quantity by a member price of the record. Further, the data of total amount of the total table 33b is overwritten with a sum value of amount of all the records stored in the registration commodity table 32b (ACT 39: update module). Then, the CPU 12a displays the first settlement screen SC5 (refer to Fig. 11) in a part of the screen of the touch panel 12g (ACT 40: selection display module).

Fig. 11 is an example of the first settlement screen SC5, and Fig. 12 is an example of the second settlement screen SC6. The first settlement screen SC5 includes display areas R21, R22 and R23 and a button B21. The second settlement screen SC6 includes display areas R31 and R32 and a button B31.

Both the display area R21 and the display area R31 display selection buttons B41, B42 and B43 of payment method. Both the display area R22 and the display area R32 display the total quantity and the total amount in the total table 33b. The display area R23 displays the accumulative point in the member table 31b. The buttons B21 and B31 are used by the customer 22 to instruct calling of the store clerk 21.

In a case in which the button B21 or the button B31 is touched, a calling signal is sent from the settlement apparatus 12 to the commodity registration apparatus 11 serving as a settlement information sending source via the LAN 13. When receiving the calling signal, the commodity registration apparatus 11 displays, for example, a calling advisory screen on the touch panel 11g. Information indicating the settlement apparatus 12 serving as the calling signal sending source is displayed on the calling advisory screen. Thus, the store clerk 21 can easily know that a calling is issued from a customer who operates the aforementioned settlement apparatus 12.

The selection button B41 is touched by the customer 22 who selects a cash payment. The selection button B42 is touched by the customer 22 who selects a credit payment. The selection button B43 is touched by the customer 22 who selects a point payment. However, in the second settlement screen SC6, the selection button B43 is displayed in gray scale, and thus the customer 22 cannot touch it. That is, the first settlement screen SC5 is used by the customer 22 who selects one of the payment methods, i.e., the cash payment, the credit payment and the point payment. The second settlement screen SC6 is used by the customer 22 who selects one of the payment methods, i.e., the cash payment and the credit payment. Although the selection button B43 is displayed on the second settlement screen SC6, the point payment cannot be selected.

The customer 22 who confirms the first settlement screen SC5 or the second settlement screen SC6 selects one from the payment methods displayed in the display area R21 or the display area R31, and touches a corresponding selection button B41, selection button B42 or selection button B43. Then, the customer 22 carries out price payment operation according to the selected payment method in the settlement apparatus 12.

After the first settlement screen SC5 or the second settlement screen SC6 is displayed, the CPU 12a waits for until the selection button B41, B42 or B43 is touched (ACT 42). If the selection button B41, B42 or B43 is touched (YES in ACT 42), the CPU 12a recognizes that a payment method corresponding to the touched selection button B41, B42 or B43 is selected. The CPU 12a executes a settlement processing according to the selected payment method (ACT 43: processing module). If the selection button B41 is touched, the CPU 12a executes a settlement processing by a cash payment. If the selection button B42 is touched, the CPU 12a executes a settlement processing by a credit payment. Further if the selection button B43 is touched, the CPU 12a executes a settlement processing by a point payment in which the accumulative point of the member table 31b is used.

These settlement processing is a well-known processing, and therefore the detailed description is not provided. By the way, in a case of a member transaction in which the member flag is set to be "1", for example, a service or premium point is calculated according to the total amount in such a settlement processing. Such a premium point is sent to the database server together with the member number in the member table 31b, and is accumulated in the member database for each member.

When the settlement processing is terminated, the CPU 12a enables the printer 12h to issue a receipt (ACT 44). Then, after the issuing of the receipt, the CPU 12a returns to the processing in ACT 31 and repeats the processing following to ACT 31 as being similar to that described above.

In this way, in the checkout system 10, if the settlement information of a commodity transaction by a non-member is transferred from the commodity registration apparatus 11 to the settlement apparatus 12, the card inquiry screen SC1 is displayed on the touch panel 12g of the settlement apparatus 12. Thus, even if for the customer 22 who completes a registration of purchased commodities as a non-member in the commodity registration apparatus 11 because his/her member card is not found, it is required to confirm carrying/non-carrying of the member card again before a settlement processing is carried out in the settlement apparatus 12. Then, if a member card is found, the customer 22 touches the button B1 on the card inquiry screen SC1 to enable the card reader/writer 12i to read data of the member card. As a result, in the settlement apparatus 12, the unit price of each purchased commodity is changed from the regular unit price to the member unit price, and the purchased amount is calculated again. That is, the settlement information of one commodity transaction by a non-member is changed to the settlement information of one commodity transaction by a member. Thus, it is also possible even for a customer 22 who completes a registration of purchased commodities as a non-member in a commodity registration apparatus to receive a member service in which the member can purchase commodities at a member price and a point is given to a member with the settlement apparatus 12.

Further, in the checkout system 10, in a case in which the settlement apparatus 12 receives the settlement information of a commodity transaction by a member, the first settlement screen SC5 is displayed on the touch panel 12g of the settlement apparatus 12. In addition, even in a case in which the settlement apparatus 12 receives the settlement information of a commodity transaction by a non-member, if an operation indicating the carrying of a member card is carried out on the card inquiry screen SC1, the first settlement screen SC5 is displayed. On the contrary, if an operation indicating the non-carrying of a member card is carried out on the card inquiry screen SC1, the second settlement screen SC6 is displayed. Further, in a case of receiving the settlement information of a non-member including the note payment information also, the second settlement screen SC6 is displayed.

Though a point payment can be selected as a payment method on the first settlement screen SC5, it cannot be selected on the second settlement screen SC6. The reason why the first settlement screen SC5 is displayed is that it is a commodity transaction by a member. The point payment is available for the commodity transaction by a member. Thus, the customer 22 who is a member can select the point payment as a price payment method. In other words, the customer 22 who is not a member cannot select the point payment by mistake.

On the other hand, the button B43 used for selecting the point payment is displayed in an unselectable form (gray scale) on the second settlement screen SC6. Thus, it can strongly appeal to a customer who is not a member that the point payment can be selected if he or she were a member.

The present invention is not limited to the embodiments described above.

For example, it is exemplified in the embodiment described above that the payment method that can be selected on the settlement screen is classified into three types, i.e., the cash payment, the credit payment and the point payment. However, the payment method may be set to more than 4 types by adding, for example, other payment method such as an electronic money payment and the like. Alternatively, the payment method may be set to two types including a cash payment and a point payment, without a credit payment. Further, in a case of applying a member service in which point is not available for the point payment, for example, it may set only one pattern of the second settlement screen SC6.

Further, it is exemplified in the embodiments described above that the card inquiry screen SC1 displayed in the commodity registration apparatus 11 and the card inquiry screen SC1 displayed in the settlement apparatus 12 are identical to one the other. However, it is not necessary to set the identical two screens to different apparatuses. In a word, as long as it is possible to inquire the customer 22 of the carrying/non-carrying of a member card and receive the inquiry result, no limitation is given to the form.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

## Claims

1. A settlement apparatus constituting a checkout system together with a commodity registration apparatus connected through a network, comprising:
a reception module configured to receive settlement information used for settling a commodity transaction of a purchased commodity registered with the commodity registration apparatus through the network;
a determination module configured to determine whether or not the settlement information received by the reception module is processed as a commodity transaction using a member card in the commodity registration apparatus;
a confirmation display module configured to display a screen for inquiring of a customer who is subjected to the commodity transaction a carrying/non-carrying of the member card and for receiving an input of the carrying/non-carrying of the member card on a display device if the settlement information is not processed as the commodity transaction using the member card;
a selection display module configured to display a screen for receiving a selection input of one method adopted from a plurality of settlement methods on the display device if the settlement information is already processed as the commodity transaction using the member card, or if the input of the carrying/non-carrying of the member card is received; and
a processing module configured to carry out a settlement processing of the settlement information received by the reception module with the one settlement method of which the selection input is received.

2. The settlement apparatus according to claim 1, wherein the selection display module displays a first screen for receiving an selection input of one method adopted from the plurality of settlement methods including a payment method using a member card on the display device if the settlement information is already processed as a commodity transaction using the member card, or if an input of the carrying of the member card is received, or displays a second screen for receiving an selection input of one method adopted from the plurality of settlement methods excluding the payment method using the member card on the display device if an input of the non-carrying of the member card is received.

3. The settlement apparatus according to claim 2, wherein the second screen displays the payment method using the member card in an excluding manner such that it is displayed in an unselectable state.

4. The settlement apparatus according to claim 1, further comprising:
an update module configured to update the settlement information received by the reception module to the information processed as a commodity transaction using the member card if the input of the carrying of the member card is received, wherein the processing module carries out a settlement processing with the settlement method the selection input of which is received for the settlement information updated by the update module.

5. A checkout system, comprising:
at least one commodity registration apparatus and at least one settlement apparatus connected with the commodity registration apparatus through a network to receive settlement information from the commodity registration apparatus, wherein the commodity registration apparatus comprises a card reception module configured to receive an input of a member card; a registration module configured to acquire a commodity code for specifying a purchased commodity and register sales data of the purchased commodity; a generation module configured to generate settlement information for settling a commodity transaction for the purchased commodity based on the sales data of the purchased commodity that is registered by the registration module during the period of registration until a completion of the registration is instructed together with information for identifying whether or not an input of the member card is received; and a sending module configured to send the settlement information to the settlement apparatus through the network; and
the settlement apparatus according to any one of claims 1 to 4.

6. A method for processing settlement by a settlement apparatus which constitutes a checkout system together with a commodity registration apparatus connected through a network to settle a commodity transaction of a purchased commodity registered in the commodity registration apparatus, including:
receiving settlement information used for settling a commodity transaction of a purchased commodity registered with the commodity registration apparatus through the network;
determining whether or not settlement information is processed as a commodity transaction using a member card in the commodity registration apparatus;
displaying a screen for inquiring of a customer who is subjected to the commodity transaction a carrying/non-carrying of the member card and for receiving an input of the carrying/non-carrying of the member card on a display device if the settlement information is not processed as the commodity transaction using the member card;
displaying a screen for receiving a selection input of one method adopted from a plurality of settlement methods on the display device if the settlement information is already processed as the commodity transaction using the member card, or if the input of the carrying/non-carrying of the member card is received; and
carrying out a settlement processing of the settlement information received by the reception module with the one settlement method the selection input of which is received.

7. The method according to claim 6, further comprising displaying a first screen for receiving an selection input of one method adopted from the plurality of settlement methods including a payment method using a member card on the display device if the settlement information is already processed as a commodity transaction using the member card, or if an input of the carrying of the member card is received, or displaying a second screen for receiving an selection input of one method adopted from the plurality of settlement methods excluding the payment method using the member card on the display device if an input of the non-carrying of the member card is received.

8. The method according to claim 6 or 7, wherein the second screen displays the payment method using the member card in an excluding manner such that it is displayed in an unselectable state.

9. The method according to any one of claims 6 to 8, further comprising:
updating the settlement information received at the receiving step to the information processed as a commodity transaction using the member card if the input of the carrying of the member card is received, and
carrying out a settlement processing with the settlement method the selection input of which is received for the settlement information updated at the updating step.

10. A program for causing a computer constituting a checkout system together with a commodity registration apparatus to execute as a settlement apparatus according to any one of claims 1 to 5.
